Europäisches Patentamt

European Patent Office

Office européen des brevets

(11) Numéro de publication: **0 243 779**
**A1**

(12) # DEMANDE DE BREVET EUROPEEN

(21) Numéro de dépôt: **87105467.2**

(22) Date de dépôt: **13.04.87**

(51) Int. Cl.³: **A 01 G 1/00**
**A 01 B 45/04**

---

(30) Priorité: **25.04.86 FR 8606566**
**20.03.87 FR 8704341**

(43) Date de publication de la demande:
**04.11.87 Bulletin 87/45**

(84) Etats contractants désignés:
**AT BE CH DE ES GB GR IT LI LU NL SE**

(71) Demandeur: **Gabard, Raymond**
**Buzy**
**F-64260 Arudy(FR)**

(72) Inventeur: **Gabard, Raymond**
**Buzy**
**F-64260 Arudy(FR)**

(74) Mandataire: **Schlawick, Yvan**
**8, rue Théophile Gautier**
**F-65000 Tarbes(FR)**

---

(54) **Machine pour dérouler, assembler et plaquer sur le sol des rouleaux de gazon précultivé.**

(57) La machine objet de l'invention est constituée d'un châssis (1) portant sur un côté une plate-forme pour un opérateur à portée duquel se trouvent un plateau (5) supportant des rouleaux (7) de gazon et plus en arrière une deuxième plate-forme (8), alors que sur la gauche du châssis (1) est positionné un plateau portant un tapis roulant (13) sur un plan horizontal, dont l'extrémité arrière est juxtaposée à une goulotte (14) inclinée qui se prolonge par deux tapis roulants enfermés dans un caisson (16). Ledit caisson (16) porte en son extrémité inférieure une fraise mécanique (22) et un arroseur (18).

FIG.1

EP 0 243 779 A1

## MACHINE POUR DEROULER, ASSEMBLER ET PLAQUER SUR LE SOL DES ROULEAUX DE GAZON PRECULTIVE

La présente invention se rapporte aux machines pour assembler et plaquer sur le sol des rouleaux de gazon précultivé, pour les terrains de sport par exemple.

Actuellement, la pose du gazon précultivé se fait traditionnellement à la main à l'aide de brouettes, en progressant sur des planches que l'on déplace au fur et à mesure de l'avancement du chantier. De plus, avant la pose des plaques de gazon, il est nécessaire de procéder à un léger ratissage du sol afin d'effacer les traces de pas, après quoi les rouleaux de gazon sont déroulés et ajustés aux plaques précédemment posées, ensuite on procède à plusieurs roulages et arrosages. Toutes ces tâches exécutées manuellement rendent l'opération de pose du gazon longue, pénible et coûteuse.

Il existe également les brevets cités dans le rapport de recherche de la demande initiale française, à savoir: le brevet US-A 4 149 640 (WHITE) qui relate un moyen pour placer le gazon au sol, comprenant une partie horizontale constituée d'un tapis roulant portant un support vertical à une extrémité et juxtaposé à un plan incliné muni d'un élément d'entraînement à doigts.

Le brevet US-A 4 408 666 (LAWSON) se rapporte à un appareil pour diriger le gazon au sol, comprenant un plateau de stockage et un chemin de roulement.

Le brevet US-A 3 982 711 (BRADLEY) se rapporte à une machine pour placer le gazon, comprenant un plateau constitué de plusieurs tapis roulants qui déversent les plaques entre des tapis verticaux au moyen d'un élément rotatif à doigts.

La présente invention permet de remédier à ces inconvénients en ce que les opérateurs et les rouleaux de gazon sont portés par la machine et cela supprime notamment la manipulation de planches, en outre, permet un gain de temps important.

La machine objet de l'invention comporte un châssis qui peut être auto-moteur ou semi-porté. Ce châssis est de préférence équipé de pneumatiques larges à basse pression 07, de telle sorte que la pression exercée sur le sol ne soit pas supérieure à 0,500 Kg/cm2, pour ne point trop tasser le sol.

Ledit châssis porte un plateau, pivotant avec tout moyen approprié, sur lequel est placée une palette de rouleaux de gazon, pour faciliter son déchargement par un opérateur se trouvant sur un plateau voisin. L'opérateur prend les rouleaux de gazon, un à un, et les dépose sur un berceau d'attente, lesquels rouleaux se déroulent sur un tapis roulant qui les dépose au sol sur un plan incliné. A l'approche du sol la plaque de gazon est prise en sandwich par deux tapis roulants de manière à permettre un positionnement efficace contre la rangée précédemment plaquée au sol. La vitesse des tapis roulants est réglée en rapport avec la vitesse d'avancement de la machine. A proximité de l'extrémité du tapis roulant proche du sol est placée une fraise mécanique qui travaille la partie superficielle du sol et un petit arroseur placé derrière humidifie la couche de terre retournée. L'extrémité inférieure du tapis roulant est maintenue contre les plaques de la rangée précédemment positionnée, par le truchement d'un guide, au moyen de système adéquat. L'arrière de la machine porte une plate-forme pour un opérateur et tire un rouleau qui porte une rampe d'arrosage, laquelle est approvisionnée par un tuyau branché à un point d'alimentation se trouvant sur le terrain. L'extrémité avant de la machine peut être munie d'un guide qui est au contact de la bordure extérieure de la dernière rangée de la plaque de gazon. Ce guide peut être muni d'un palpeur qui agit directement sur la direction de la machine.

Les moyens pour cheminer le gazon jusqu'au sol peuvent être constitués partiellement avec des tapis roulants proposés sur le marché.

Les dessins annexés illustrent à titre d'exemple non limitatif des modes de réalisation du dispositif conforme à la présente invention, qui permettront de dévoiler d'autres caractéristiques de l'invention.

La figure 1 représente, en élévation, l'ensemble de la machine.

La figure 2 représente en élévation, à une autre échelle, le cheminement des plaques de gazon jusqu'au sol sur les tapis roulants.

La figure 3 représente en vue de dessus, à une autre échelle, la machine à plaquer du gazon selon la figure 1.

La figure 4 représente en perspective un guide positionné à l'extrémité des éléments de pose, pour juxtaposer les plaques de gazon.

La figure 5 représente en élévation, le cheminement des plaques de gazon jusqu'au sol, selon une conception simplifiée de la machine.

La figure 6 représente partiellement, en élévation, une variante de la partie horizontale constituant le poste attente des rouleaux, et la partie haute du plan incliné.

La figure 7 représente, partiellement en élévation, la partie inférieure du plan incliné selon la figure 6.

La figure 8 représente, partiellement en élévation, une fraise mécanique et son moyen de fixation sur le châssis.

La figure 9 représente, partiellement en élévation, à une autre échelle, la came de guidage de la machine selon la figure 6.

La figure 10 représente la came en vue de dessus, selon la réalisation de la figure 9.

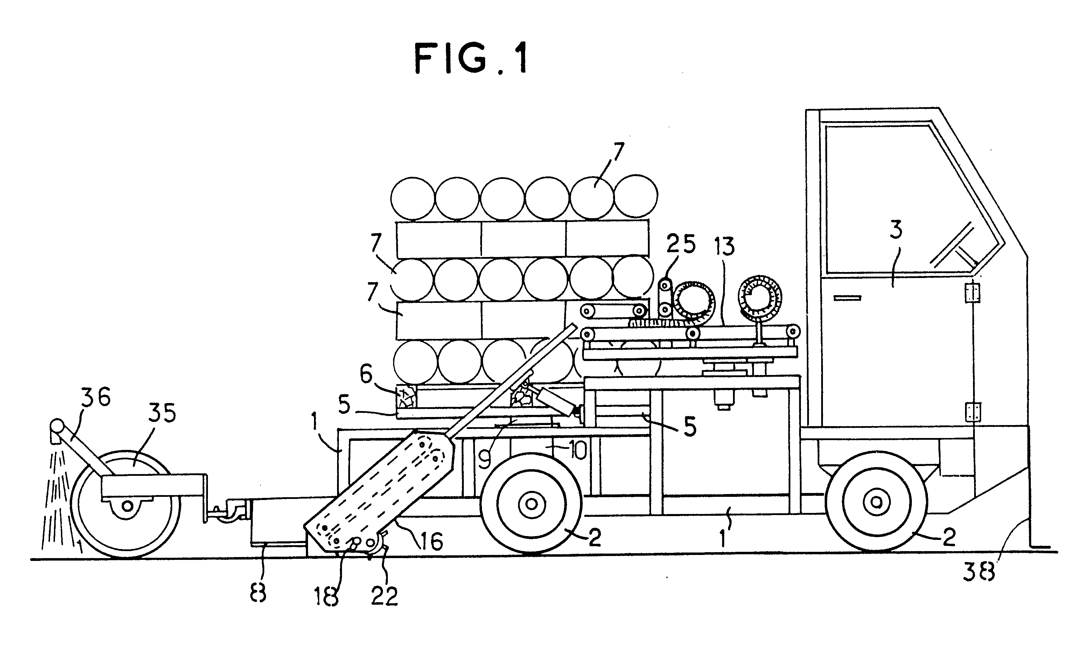

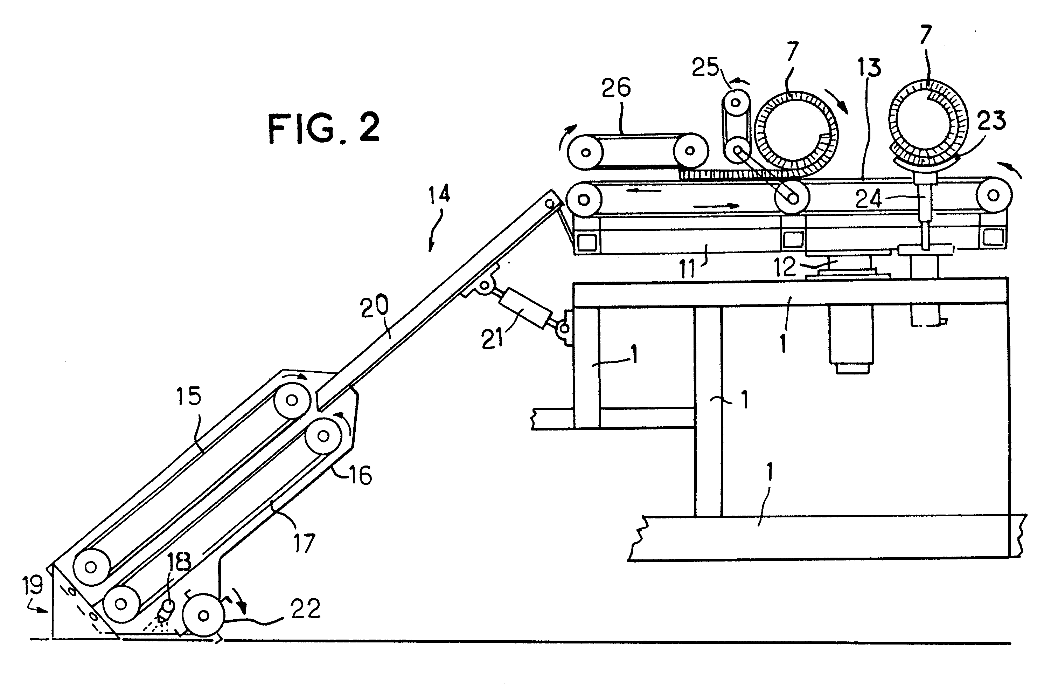

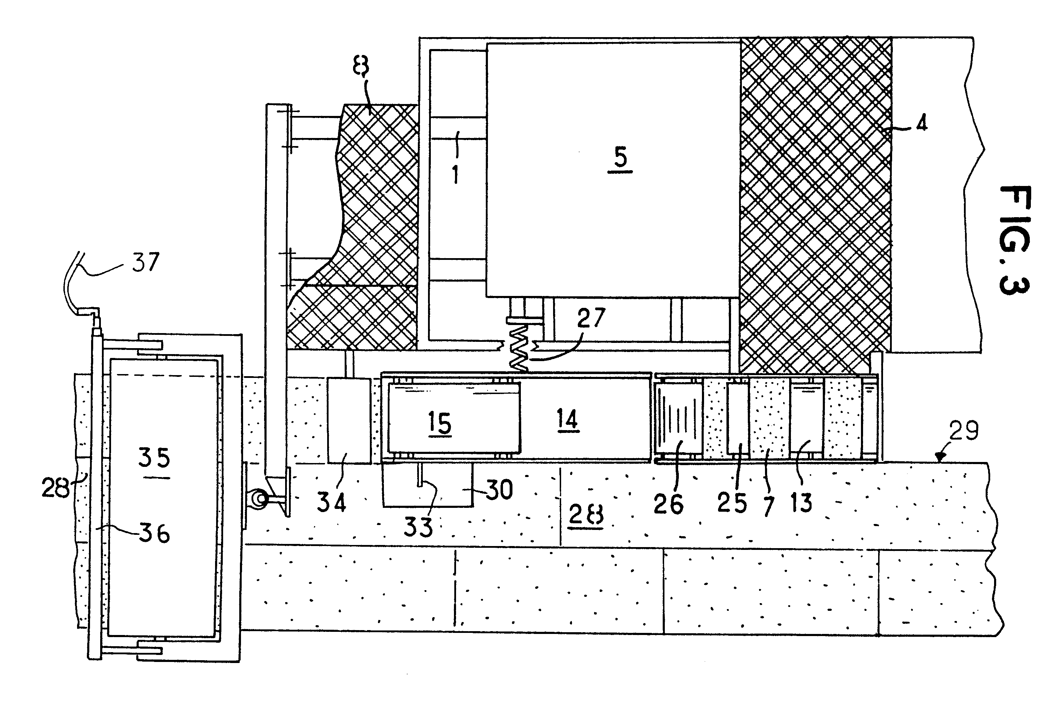

Telle que représentée en figures 1, 2, 3 et 4, la machine

4

comporte un châssis 1 longitudinal porté par des pneumatiques 2 larges à basse pression et tracté par un moteur enfermé dans une cabine de pilotage 3, lequel châssis 1 porte de l'avant vers l'arrière sur le côté droit, en regardant vers l'arrière, une plate-forme 4 pour placer un premier opérateur à portée duquel se trouve un plateau 5 supportant une palette 6 chargée de rouleaux 7 de gazon et plus en arrière du plateau 5 se trouve une autre plate-forme 8 supportant un deuxième opérateur, alors que sur le côté gauche du châssis 1 sont positionnés les éléments qui permettent le cheminement et le placage du gazon au sol.

Le plateau 5 est porté par un axe 9 pivotant qui est actionné par un petit moteur électrique 10 dont la vitesse est réglée par rapport à l'avancement de la machine, afin de présenter à l'opérateur les rouleaux 7 de gazon placés à l'opposé sur la palette. Le moteur électrique peut être alimenté par des batteries d'accumulateur.

Les éléments de transport du gazon comportent un plateau 11 longitudinal porté par un axe 12 pivotant, sur lequel plateau 11 est fixé un tapis roulant 13 qui est juxtaposé par son extrémité arrière à une goulotte 14 inclinée qui a son extrémité inférieure prise entre deux tapis 15 et 17 fixés et maintenus dans un caisson 16, lequel caisson 16 a sa partie avoisinant le sol munie d'une fraise mécanique 22 (comme on en trouve dans le commerce) et d'un arroseur 18, et l'extrémité inférieure dudit caisson 16 est dotée d'un guide 19.

La goulotte 14 est constituée d'une plaque de métal formant le fond et comporte des rebords 20 latéraux pour guider les plaques de gazon qui descendent par gravité. La goulotte 14 est articulée en son extrémité supérieure sur le plateau 11 par l'entremise de deux tiges munies de moyens rotatifs tels que paliers mobiles (non représentés), et ladite goulotte est manoeuvrée en sa partie médiane par le truchement d'un vérin 21 fixé sur le châssis 1, lequel vérin 21 permet de faire varier l'inclinaison de la goulotte 14, selon les spécificités des plaques de gazon, ainsi que de soulever l'extrémité inférieure du plan incliné en bout de rangée pour manoeuvrer.

L'extrémité avant du tapis roulant 13 est surmontée d'un berceau constitué de deux arcs 23 parallèles positionnés de part et d'autre du tapis, lesquels arcs 23 sont portés par des vérins 24 qui s'escamotent vers le bas déposant le rouleau 7 de gazon sur le tapis 13 qui l'amène vers l'arrière, lequel rouleau 7 de gazon vient buter contre un petit tapis roulant 25 placé verticalement et à l'aplomb du tapis 13, lequel tapis 25 a sa partie en contact qui tourne de bas vers le haut provoquant le déroulement du rouleau 7 vers l'arrière, lequel rouleau 7 s'étend au fur et à mesure sur le tapis 13 qui le porte jusqu'à l'extrémité supérieure de la goulotte 14. Pour permettre un bon déroulement du rouleau 7 de gazon, un deuxième tapis 26 roulant placé également à l'aplomb du tapis 13 mais dans le sens horizontal, prend le gazon en sandwich jusqu'à la goulotte 14. Les vérins 24 s'escamotent à cadence régulière qui est réglée sur la vitesse de pose des plaques de gazon au sol.

Les tapis roulants 25 et 26 sont fixés par tous moyens appropriés sur le plateau 11.

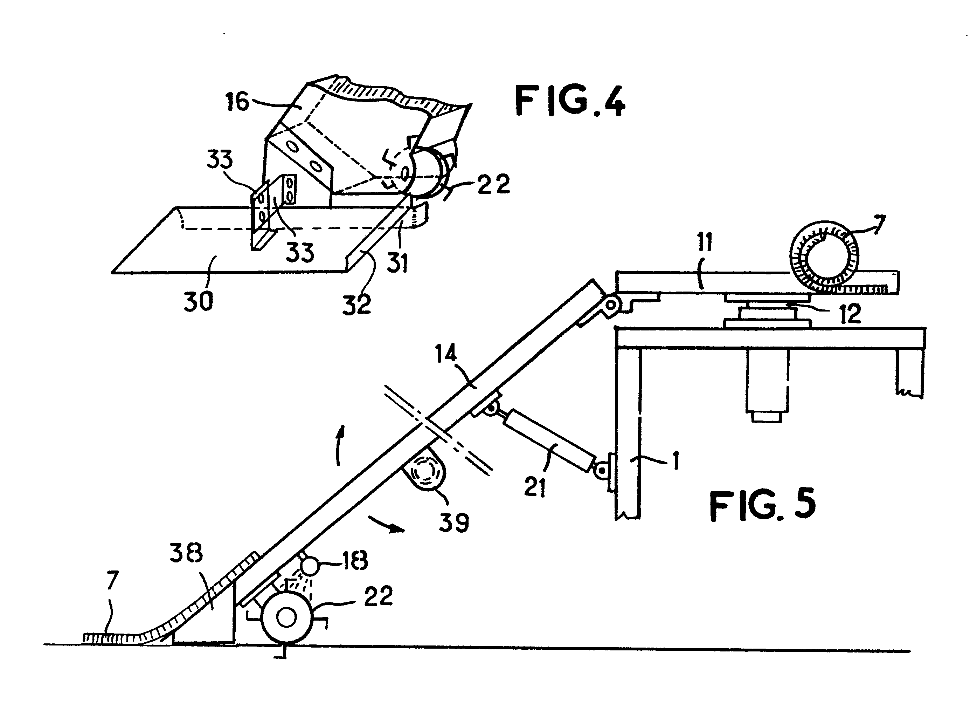

Un ressort 27 fixé par une extrémité sur le châssis 1 a son autre extrémité fixée sur le côté de la goulotte 14, maintenant cette dernière contre la rangée 28 de gazon précédemment plaquée au sol, par le truchement du guide 19. Le guide 19 est constitué (voir figure 4) d'une plaque 30 rectangulaire positionnée horizontalement dont un côté longitudinal comporte un rebord 31 orienté vers le bas et une extrémité 32 est recourbée vers le haut. La plaque 30 est juxtaposée au caisson 16 par le côté, au moyen de plaques de fixation 33, laquelle plaque 30 glisse sur la rangée 28 de gazon et par son rebord 31 appuie contre le bord 29 du gazon de manière que les plaques en cours de pose soient bien ajustées à la rangée précédente. Le guide 19 peut être muni d'un palpeur (non représenté) qui agirait directement sur le moyen faisant pivoter l'axe 12 qui porte le plateau 11 sur lequel sont positionnés les tapis roulants horizontaux, afin de corriger en permance la pose des plaques de gazon.

Une plaque vibrante 34, fixée par tout moyen approprié au châssis 1, est positionnée dans le prolongement du caisson 16 pour ajuster les plaques de gazon au fur et à mesure de leur pose.

L'arrière du châssis tire un rouleau 35 qui porte une rampe 36 d'arrosage reliée par un tuyau 37 à une bouche d'alimentation (non représentée). Le rouleau 35 roule en continu sur les trois dernières bandes de gazon posées.

A l'avant de la machine, un guide 38 muni d'un palpeur (non représenté) est en contact avec la rangée de gazon précédemment plaquée au sol, permettant de rectifier, par le truchement de moyens appropriés, la direction d'avance de la machine.

Les tapis roulants 13, 15, 17, 25 et 26 ont leurs vitesses synchronisées entre eux au moyen de régulateurs et temporisateurs, ainsi que par rapport à l'avance de la machine.

La figure 5 représente une réalisation simplifiée de la machine en ce que les tapis roulants ont été supprimés, donc le rouleau 7 de gazon est déroulé manuellement sur le plateau 11, puis poussé sur la goulotte 14 inclinée, sur laquelle il descend par gravité jusqu'au sol. L'extrémité inférieure de la goulotte 14 porte la fraise mécanique 22, l'arroseur 18 et un guide 38 constitué d'une simple plaque verticale, laquelle a sa partie inférieure qui pousse sur la bordure 29 de la rangée 28 du gazon posé, sous la pression d'un ressort 27 appuyant sur la plaque 39 fixée sur ladite goulotte. Selon cette réalisation simplifiée, un opérateur porté par la plate-forme 8 ajuste manuellement les plaques de gazon au sol.

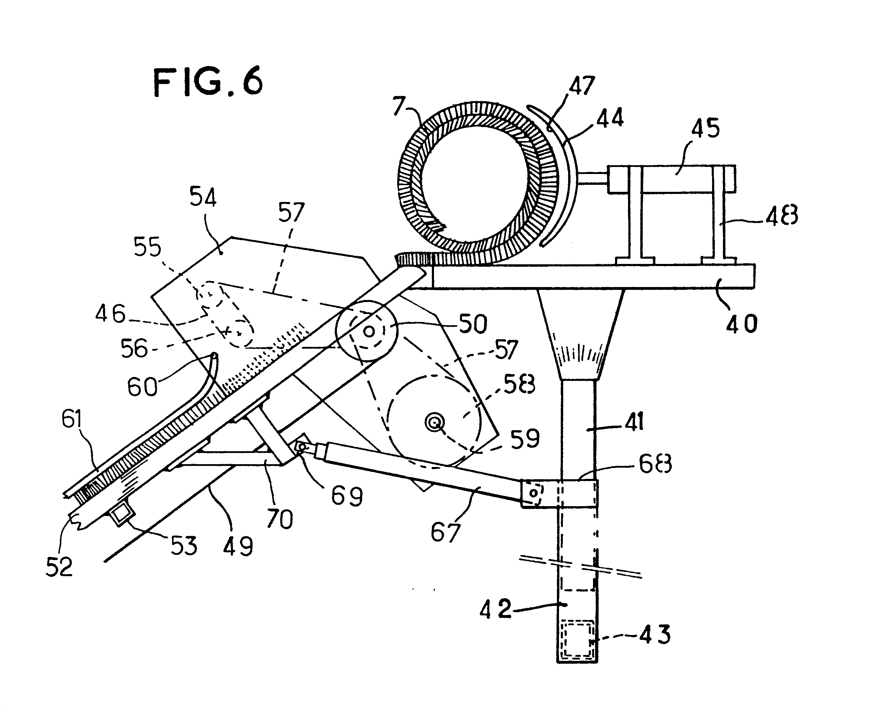

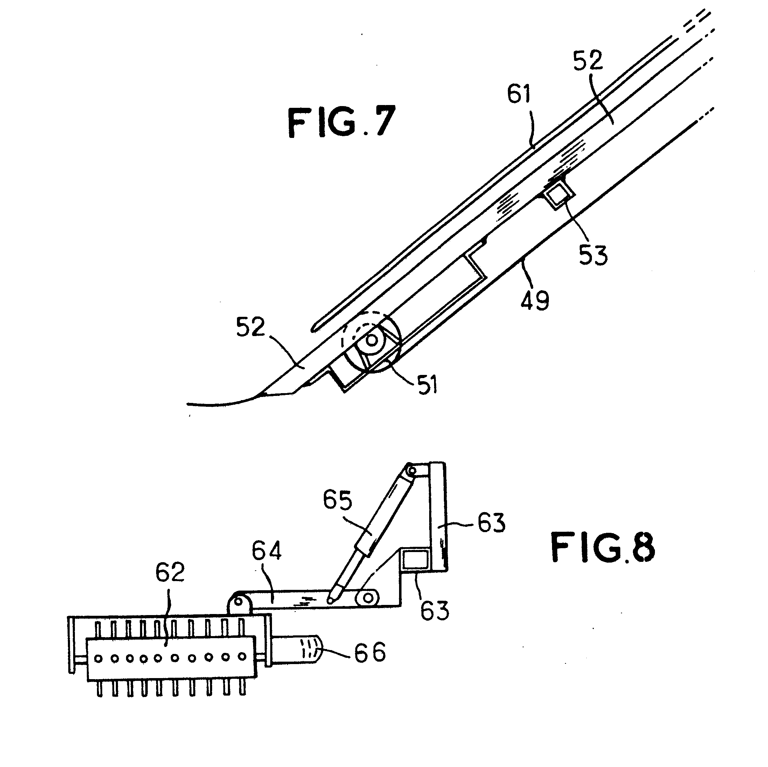

Les figures 6, 7, 8, 9 et 10 représentent une autre variante de réalisation, conforme à l'invention comprenant un plateau supérieur 40 porté au moyen d'une poutre verticale 41 qui coulisse dans une deuxième poutre verticale 42 reliée au châssis par une poutre horizontale 43, sur lequel plateau est posé un rouleau 7 de gazon qui est amené au moyen d'un berceau 44 manoeuvré par un vérin 45, jusqu'à un tapis roulant vertical
46 placé sur la partie haute du plan incliné.

Le berceau 44 est constitué par une tôle incurvée qui est
positionnée sur un plan vertical, de manière à présenter le
côté 47 incurvé face au rouleau 7 de gazon, pour permettre de
faire glisser celui-ci jusqu'au tapis 46 sans le déformer.

Le berceau 44 est actionné, par son côté bombé, au moyen du
vérin 45 qui est fixé sur un plan horizontal par le truchement
de deux brides 48 de fixation sur le plateau supérieur 40.

Le rouleau 7 de gazon poussé par le berceau 44 arrive au plan
incliné qui est formé par un tapis roulant 49 entraîné par
des poulies 50 et 51, lesquelles poulies sont fixées sur un
cadre 52 longitudinal renforcé par des profilés transversaux
53.

A l'extrémité supérieure du plan incliné, sur les côtés latéraux du cadre 52 sont fixés deux flasques 54, de manière
opposée, lesquels flasques 54 portent deux poulies 55 et 56
superposées qui entraînent le tapis roulant 46 permettant de
défaire le rouleau 7 de gazon. Les poulies 55 et 56 et le
tapis roulant 49 sont actionnés avec le moteur de la machine
par le truchement de moyens connus tels que: chaînes 57,
pignon 58 et axe 59. A hauteur de la poulie 56 et transversalement au plan incliné, une tige 60 est fixée par ses extrémités aux flasques 54, laquelle tige 60 retient, au moyen d'une
attache rotative, une pièce 61 longitudinale positionnée sur
le centre du tapis roulant 49 dudit plan incliné. Cette pièce
61 longitudinale permet par son inertie, dûe à son poids, de
maintenir le gazon plaqué sur le tapis roulant et d'éviter
tout amoncellement. La pièce 61 pouvant être en bois, en
aluminium, etc ...

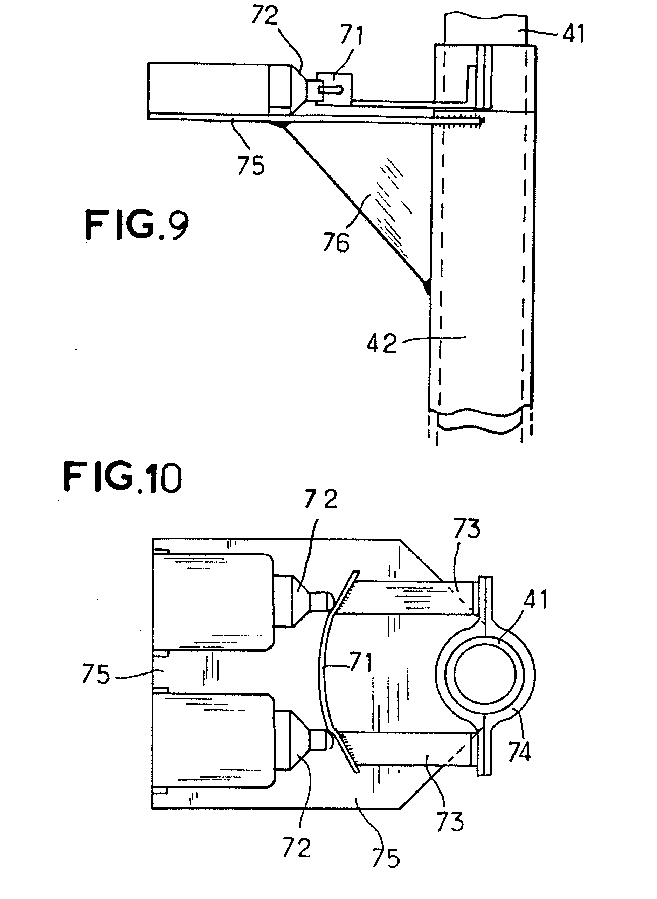

La figure 8 montre une fraise mécanique 62 positionnée sous le
plan incliné et reliée au châssis 63 de la machine par un bras
articulé 64 qui est relevé par un vérin 65. La fraise mécanique 62 est actionnée par un petit moteur électrique 66 et peut être jumelée avec un rouleau non représenté.

Le plan incliné est manoeuvré avec un vérin 67 fixé par une extrémité à la poutre verticale 42 au moyen d'une bride 68 et par sa tige sur une traverse 69 placée sous le tapis roulant 49 et fixée par deux équerres latérales 70 au cadre 52.

Le guidage automatique de la machine s'effectue par le truchement d'un patin fixé à l'extrémité inférieure du plan incliné, par tout moyen approprié, lequel patin est maintenu en appui permanent, avec un effort contrôlé, sur la bande de gazon précédemment posée. Sur la poutre 41 circulaire, portant le plateau supérieur 40, sont fixés une came 71 et deux contacts électriques 72, dont l'un d'entre eux est actionné, selon que le plan incliné se déporte vers la droite ou la gauche, provoquant l'alimentation de l'une des deux chambres du vérin de direction de la machine.

La came 71 est constituée d'un fer courbé solidarisé à la poutre 41 par le truchement de deux fers plats 73 et d'une bride circulaire 74. Les contacts électriques 72 sont portés par un plateau 75 fixé au moyen d'une équerre 76 à la poutre inférieure 42.

## REVENDICATIONS

1) Machine pour dérouler, plaquer et assembler sur le sol des rouleaux de gazon précultivé, caractérisé en ce qu'un châssis (1) longitudinal est porté par des pneumatiques (2) à basse pression, lequel châssis (1) porte de l'avant vers l'arrière sur le côté droit, une plate-forme (4) pour un opérateur à portée duquel se trouve un plateau (5) supportant des rouleaux (7) de gazon et plus en arrière une deuxième plate-forme (8), alors que sur la gauche du châssis est positionné un plateau (11) portant un berceau d'attente (23) et des tapis roulants (13), (25) et (26), dont le tapis roulant (13) est positionné sur le plan horizontal et son extrémité arrière est juxtaposée à l'extrémité supérieure d'une goulotte (14) oblique, laquelle goulotte (14) a son extrémité inférieure qui se prolonge par deux tapis roulants (15) et (17) positionnés dans un caisson (16), ce dernier caisson porte une fraise mécanique (22), un arroseur (18) et un guide (19), caractérisé en ce que selon une variante un plateau supérieur (40), juxtaposé à l'extrémité supérieure du plan incliné, porte un vérin (45) positionné horizontalement qui manoeuvre un berceau (44) constitué d'une tôle verticale, lequel berceau (44) pousse le rouleau (7) de gazon sur le plan incliné, contre un tapis roulant (46) positionné verticalement et transversalement, à l'aplomb d'un tapis roulant (49) qui conduit le gazon jusqu'au sol, lequel gazon est maintenu sur le tapis roulant (49) avec une pièce (61) longitudinale qui pivote sur le milieu d'une tige (60) placée sur les flasques (54), en ce que le plateau supérieur (40) est porté par une poutre circulaire (41) sur laquelle est fixée une came (71) et deux contacts électriques (72) qui commandent l'alimentation de l'une des deux chambres du vérin de direction.

2) Machine selon la revendication 1, caractérisée en ce que le berceau d'attente est constitué de deux arcs (23) portés respectivement par un vérin (24) vertical reposant sur le châssis et positionnés de part et d'autre du tapis roulant (13).

3) Machine selon les revendications 1 et 2, caractérisée en ce que les arcs (23) formant le berceau s'escamotent vers le bas par le truchement des vérins (24) à une cadence régulière.

4) Machine selon la revendication 1, caractérisée en ce qu'un tapis roulant (25) est positionné verticalement et à l'aplomb du tapis (13) pour dérouler les rouleaux (7) de gazon.

5) Machine selon les revendications 1 et 4, caractérisée en ce qu'un tapis roulant (26) est positionné horizontalement à l'extrémité arrière du tapis (13) pour pousser les plaques de gazon déroulées sur la goulotte.

6) Machine selon la revendication 1, caractérisée en ce qu'un ressort (27) fixé par une extrémité sur le châssis (1) et par son autre extrémité sur la goulotte (14), maintient un guide (19) contre la rangée (28) de gazon précédemment posée.

7) Machine selon la revendication 1, caractérisée en ce que selon une variante, le tapis roulant (46) est fixé à l'aplomb du plan incliné perpendiculairement au tapis roulant (49).

8) Machine selon les revendications 1 et 7, caractérisée en ce que selon une variante, la came (71) est constituée d'un fer courbé fixé à la poutre circulaire (41) au moyen d'une bride (74).

9) Machine selon les revendications 1 et 8, caractérisée en ce que le plan incliné, en pivotant sur la droite ou sur la gauche, déclenche un des deux contacts électriques (72) par le truchement de la came (71) provoquant l'alimentation de l'une des deux chambres du vérin de la direction.

# FIG.1

024377

FIG. 2

# FIG.3

FIG.4

33

33

16

22

30

32

31

FIG.5

11

7

12

14

1

21

39

38

7

18

22

# FIG.6

# FIG.7

# FIG.8

FIG.9

FIG.10

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| D,A | US-A-3 982 711  (BRADLEY)<br>* Colonne 3, ligne 35  - colonne 7, ligne 12; figures 1-3 *<br><br>--- | 1 | A 01 G    1/00<br>A 01 B   45/04 |
| D,A | US-A-4 149 640  (WHITE)<br>* En entier *<br><br>--- | 1 | |
| D,A | US-A-4 408 666  (LAWSON)<br>* Colonne  3, ligne 32 - colonne 6, ligne 26; figures 1-3 *<br><br>----- | 1 | |

| | |
|---|---|
| | DOMAINES TECHNIQUES RECHERCHES (Int Cl 4) |
| | A 01 G<br>A 01 B |

Le présent rapport de recherche a été établi pour toutes les revendications

| Lieu de la recherche | Date d'achèvement de la recherche | Examinateur |
|---|---|---|
| LA HAYE | 04-08-1987 | HERYGERS .J.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
.L : cité pour d'autres raisons
& : membre de la même famille, document correspondant

OEB Form 1503 03 82